# Europäisches Patentamt
# European Patent Office
# Office européen des brevets

(19)

(11) Publication number: **0 117 006**
**B1**

(12)

## EUROPEAN PATENT SPECIFICATION

(45) Date of publication of patent specification: **14.12.88**

(51) Int. Cl.⁴: **G 01 N 1/00,** G 01 N 25/20, B 25 J 11/00

(21) Application number: **84200209.9**

(22) Date of filing: **16.02.84**

(54) Automatic sample handling device.

(30) Priority: **16.02.83 NL 8300586**

(43) Date of publication of application:
**29.08.84 Bulletin 84/35**

(45) Publication of the grant of the patent:
**14.12.88 Bulletin 88/50**

(84) Designated Contracting States:
**AT BE CH DE FR GB IT LI NL SE**

(56) References cited:
**EP-A-0 003 936**
**DE-B-2 353 793**
**US-A-4 005 782**

(73) Proprietor: **DOW CHEMICAL (NEDERLAND) B.V.**
**Herbert H. Dowweg 4 P.O. Box 48**
**NL-4530 AA Terneuzen (NL)**

(72) Inventor: **Laarhoven, Johannes P. M.**
**Rijnstraat 2**
**NL-4535 GW Terneuzen (NL)**
Inventor: **van Heel, Christiaan F. J.**
**Eemstraat 3**
**NL-4535 EA Terneuzen (NL)**
Inventor: **Torfs, Jan C. M.**
**Rivierenpark 51**
**NL-4535 EJ Terneuzen (NL)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

## Description

The present invention relates to a differential scanning calorimetry apparatus.

A differential scanning calorimeter (DSC) is commonly employed in a method for thermally analyzing a material. Using DSC analysis, the difference in energy fed into a test material and a reference material are measured as a function of temperature, while the test material and the reference material are subjected, in an environmental (measuring) cell, to a controlled temperature program. In a conventional evaluation using a DSC, a relatively small, encapsulated sample of the test material is placed in the measuring cell containing a sample of the reference material, and the measuring cell is then covered with a lid having a passageway to allow the escape of gas from the measuring cell. In addition, one or more cover means comprising thermal sleeves and/or protective hoods are generally placed over the measuring cell. Following the thermal evaluation, which generally takes about one hour, the insulating sleeve(s) and/or protective hood(s) are removed from the measuring cell and a new, encapsulated sample to be tested exchanged for the previously tested sample of the test material.

Heretofore, this periodic sample transfer, a time consuming operation, has been conducted manually. Unfortunately, for various reasons (e.g., the required number of operations and the comparatively small size of the encapsulated samples, especially in relation to the relatively large dimensions of the cover means) no one has heretofore effectively automated the sample transfer procedure of a differential scanning calorimeter with success.

Therefore, it remains highly desirable to provide an effective and economical device for handling a number of samples over an extended period of time.

Accordingly, in one aspect, the present invention provides a differential scanning calorimetry apparatus comprising means for automatically handling in a cyclic order of operations a plurality of samples on an individual basis, said means comprising a sample holder capable of holding a plurality of samples, first transfer means, comprising first vacuum means to move during each cycle of operation, a sample from the sample holder to a receptacle for the sample, and to remove the tested sample from the receptacle, wherein the first transfer means and the sample holder cooperate in such a manner that a new sample of untested material is transferred from the sample holder to the receptacle and a tested sample is removed from the receptacle during each cycle of operation, wherein the sample holder contains samples destined for differential scanning calorimetry which are provided to the first transfer means in a systematic order, the first transfer means comprises a first, vertical air cylinder which carries at its lower end the first vacuum means to remove and to place said samples, the receptacle comprises a removable cover means and provides for thermal analysis of the samples; and second transfer means are provided to remove, during each cycle of operation, the cover means from the receptacle to allow a motion of the first vacuum means by an activation of the first air cylinder to and from the receptacle, and to replace the cover means.

It is observed that DE-B-2,353,793 discloses an apparatus for automatically handling, in a cyclic order of operation, a plurality of samples on an individual basis. The apparatus comprises first transfer means including vacuum means to move a sample, in the form of a tablet, from a sample holder to a receptacle. This publication, however, does not provide an apparatus for DSC wherein the samples are delivered to the first transfer means in a systematic order and also does not describe cover means for the receptacle nor transfer means for such cover means.

It is further observed that EP-A-3936 discloses an apparatus for automatically handling, in a cyclic order of operation, a plurality of samples on an individual basis. This apparatus comprises, in addition to first transfer means, second transfer means to remove and replace a cover means from respectively on a receptacle.

The apparatus according to this publication is designed to transport, to weigh and to pour away a fluid sample in a receptacle with a cover. The samples consist of quite heavy dangerous chemical or radioactive material, which have to be handled very carefully. The publication therefore does not disclose a DSC apparatus with its inherent problems because of the small dimensions of the samples and moreover does not describe in what way the samples are placed in the receptacle.

In a preferred embodiment, the second transfer means comprises a second vacuum means. In said embodiment, a preferred means for covering the receptacle is designed so that gases can freely pass to or from the receptacle but a vacuum can effectively be applied to the cover. A preferred cover means for the receptacle comprises a disk or sheet having one or more perforations or passages therein which allow the flow of gas from one surface of the disk or sheet to the opposite surface and a continuous disk or sheet which allows essentially no gas to flow therethrough. The perforated disk or sheet and the continuous disk or sheet are interconnected by a conduit having one or more perforations or passages such that gas passing through the perforated disk or sheet subsequently passes from the conduit through said perforations or passages.

The apparatus of this invention is unique in that it provides an effective and economical means for automatically transferring, in a systematic order, the relatively small, encapsulated samples used for DSC analyses. Moreover, the complexity of the equipment required to provide such automatic sample transfer is surprisingly small. For example, the lifting of the relatively small encapsulated samples as well as the comparatively larger and heavier cover means, insulating sleeve and protective hood for subsequent movement can be accomplished using one vacuum, thereby requiring a single source of vacuum. In addition, the movement, i.e. the removal and replacement, of the small, encapsulated sample and the cover means, insulating sleeve and protective hood can be conducted using air-driven pistons and a single source of compressed air.

The apparatus of the present invention is particularly useful for automatically handling experimental samples in conjunction with conventional DSC type equipment, including both the powercompensation DSC and the heat flux DSC, thereby allowing continuous and unattended evaluation of a plurality of samples over an extended period.

An understanding of this invention will be facilitated by referring to the accompanying drawings, in which

Fig. 1 is a schematic representation which illustrates an embodiment of the present invention wherein the apparatus of the present invention is employed in conjunction with a DSC,

Fig. 2 is a part-sectional side-elevational view of a preferred sample holder,

Fig. 3 is a schematic isometric top view of the sample table illustrated in Fig. 2 further depicting a means for moving the sample holder to ensure a new sample is tested following each cycle,

Fig. 4 is a detailed schematic representation partly in cross-section, of a preferred cover means, insulating sleeve and protective hood for enclosing the measuring cell of the DSC depicted in Fig. I

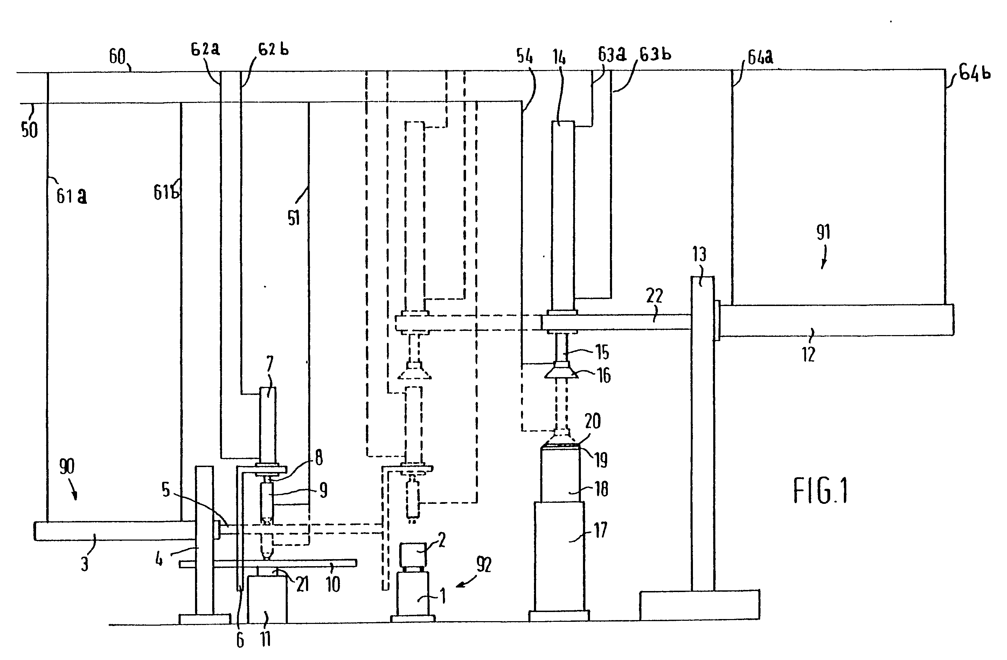

Referring now more particularly to the drawings, Fig. 1, which represents an embodiment of the present invention, depicts a differential scanning calorimeter cell 92 having a support 1 and a receptacle 2. A first transfer means 90 for transferring samples of the materials to be tested from a sample holder, such as sample table 10 to the receptacle 2 of measuring cell 92 and for removing tested samples therefrom, comprises a second air cylinder 3, which is supported by a stand 4 and connected to a source of air (not shown) by means of lines 61a and 61b. Cylinder 3 has a slidable piston or rod 5 connected to a movable support 6. Movable support 6 supports a first air cylinder 7. First air cylinder 7 is connected to the source of air by means of lines 62a and 62b. A vacuum nozzle 9 is connected to cylinder 7 by a slidable piston or rod 8. vacuum nozzle 9 is connected to a source of vacuum (not shown) by means of line 51.

The sample table 10 is rotably mounted on a base 11 by means of a rotating rod or bearing 21. The table 10 and nozzle 9 are positioned so that vacuum nozzle 9 can pick up a sample from table 10 and transport it to the receptacle 2 of the DSC unit.

The sample handling apparatus depicted in Fig. 1 further comprises a second transfer means 91 having a third air-driven cylinder 12 supported by a stand 13 and connected to an air source by means of lines 64a and 64b. Associated with cylinder 12 is a slidable piston or rod 22, which supports a fourth air-driven cylinder 14. Cylinder 14 is connected to an air source by means of lines 63a and 63b. Associated with cylinder 14 is a slidable piston or rod 15 having a vacuum cup 16 connected thereto. Vacuum cup 16 is connected to the source of vacuum by means of line 54.

In the embodiment depicted by Fig. 1, the means for enclosing the receptacle 2 of the DSC cell 92 comprises a cover means 20, an insulating sleeve 18 and a protective hood 17. Cover means 20 is shown to rest in a container 19 which is permanently fixed to insulating sleeve 18. Insulating sleeve 18 rests, in turn, on the protective hood 17.

During each cycle of operation of the apparatus shown, the tested sample is removed from receptacle 2 by extending the slidable piston 5 associated with second cylinder 3 so that the first cylinder means 7 and the vacuum nozzle 9 are positioned directly over the open receptacle 2 of the DSC cell 92. Slidable piston 8 is then extended until nozzle 9 contacts the encapsulated sample of the tested material within the receptacle 2. A vacuum is created in nozzle 9 by means of line 51 which allows the sample to be withdrawn from the receptacle upon the return of piston 8 towards its original position. Piston 5 is thereafter returned to its original unextended position. During its return, the vacuum in nozzle 9 is interrupted briefly to allow the tested sample to drop harmlessly therefrom.

An encapsulated sample of an untested material to be exchanged for the just removed sample of tested material is removed from sample table 10 by extending piston 8 to allow the nozzle 9 to contact the untested sample on table 10. The vacuum existing in nozzle 9 allows the removal of the encapsulated sample from table 10 upon the return of piston 8 to its original position.

To place the sample of the untested material in the receptacle 2 of the measuring cell 92, piston 5 is again extended so that first cylinder means 7 and vacuum nozzle 9 are properly positioned directly over the open receptacle 2 of DSC cell 92. At the completion of such extension, nozzle 9, still carrying the untested sample, is lowered into the receptacle by extending piston 8. The vacuum existing in nozzle 9 is then released. Piston 8 is then returned, without the sample, to its original position, leaving the encapsulated sample of the untested material positioned in its proper location within receptacle 2. Subsequently, piston 5 is also returned to its original, unextended position.

Prior to the testing of the newly positioned sample, the cover means 20, insulating sleeve 18 and protective hood 17 are placed over the receptacle 2 of the DSC cell 92. The cover 20 is replaced by extending piston 15 so that vacuum cup 16 contacts the cover means. A vacuum is generated in vacuum cup 16 by means of line 54 sufficient to lift the cover from the container 19 upon return of piston 15 to its original, unextended position. Cover 20 is subsequently placed over the receptacle 2 by extending piston means 22 such that the cylinder 14 and piston 15 are properly positioned directly over the DSC cell 92. Subsequently, piston means 15 is extended thereby lowering the cover means 20 in the receptacle 2. The vacuum in the vacuum cup is subsequently released. The piston 15 and vacuum cup 16 are returned to their original, unextended position, leaving the cover means 20 in its proper location in receptacle 2. The piston 22 is then returned to its original, unextended position.

The insulating sleeve 18 and protective hood 17 are placed over the receptacle 2 following a similar procedure. Specifically, the piston 15 is extended so that the vacuum cup 16 contacts the insulating sleeve 18 or the container 19 affixed thereto so that upon the return of the piston to its original position, the insulating sleeve is carried by the vacuum cup. The piston 22 is then extended to a proper position over the DSC cell. Subsequently, the piston 15 is extended to place the insulating sleeve over the receptacle 2 of the DSC cell 92. The vacuum to the vacuum cup 16 is then released and the pistons 15 and 22 returned to their original, unextended positions. The protective hood 17 is then placed over the DSC cell by picking up the protective hood 17 from its rest position by means of piston 15 and vacuum cup 16. Thereafter, piston 22 is extended to properly position the protective hood 17 over the DSC cell. The piston 15 is then extended and the vacuum of vacuum cup 16 released, leaving the hood 17 covering the DSC cell 92. The pistons 15 and 22 are then returned to their unextended position. The protective hood, insulating sleeve and cover means are easily removed from the DSC cell by performing the above described steps in a reversed order.

Although the embodiment illustrated shows the use of vacuum, which is generally preferred in the application of the present invention, the transfer means for transferring the cover means and any insulating sleeve(s) or protective hood(s), may alternatively, and suitably, comprise a magnet (if the cover, sleeve and/or hood are of a suitable material) or the like- for effecting the transfer operations described.

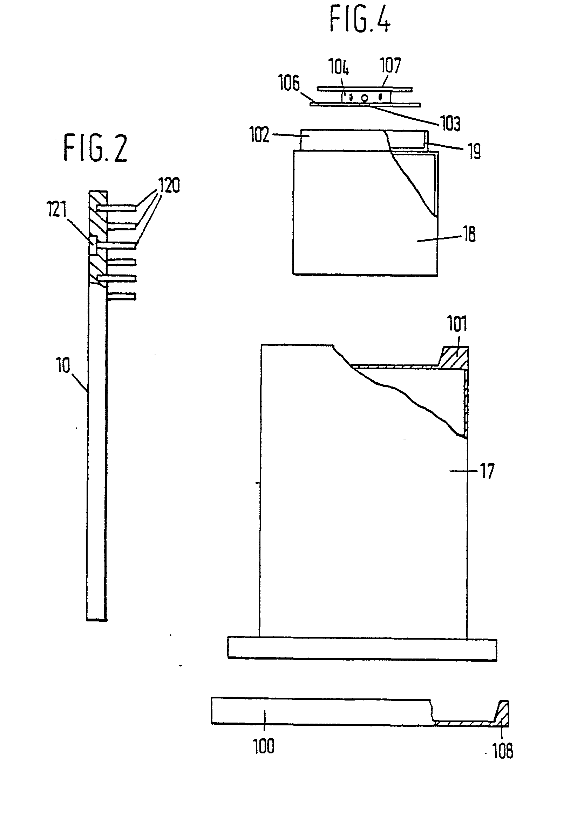

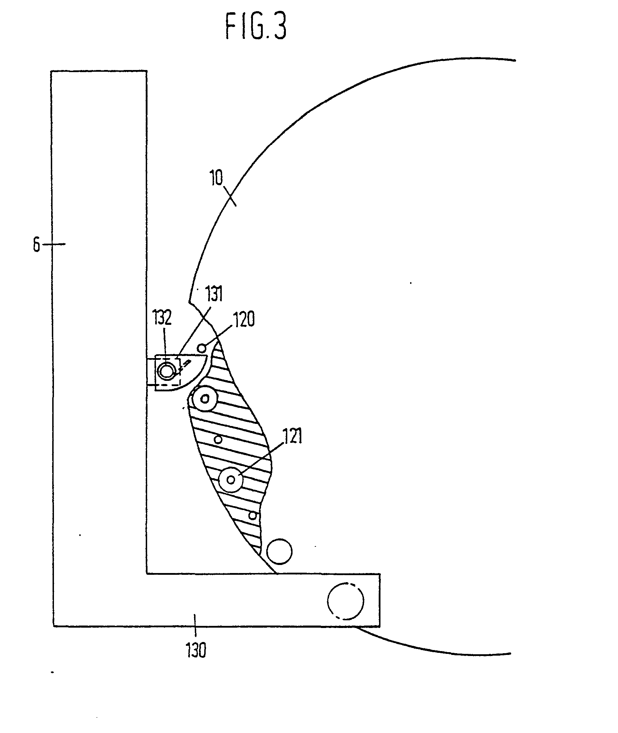

During each cycle of the hereinbefore described operation, the sample holder and/or first transfer means operate so that an encapsulated sample of a new, untested material can be supplied to the receptacle of the DSC cell during the next cycle of operation. Any of a variety of methods can be employed to ensure that a new sample is transferred from the sample holder to the DSC cell during each cycle of operation. Of such methods, one preferred method includes rotating the sample table 10 during each cycle so as to position a new sample under vacuum nozzle 9 following each cycle of operation. A preferred sample table 10 and carrier support 6 which provide such movements are depicted in Figs. 2 and 3.

Specifically, Figs. 2 and 3 depict a round sample table useful in the embodiment shown in Fig. 1. The illustrated sample table preferably comprises a multiplicity of equidistantly spaced sample receptacles 121 which form a circle having the same centre or essentially the same centre as table 10. The size of table 10 is primarily selected on the maximum number of samples to be tested prior to operator intervention. Typically, the table contains sufficient sample receptacles so that the operation can be effected overnight without the necessity of an operator being present, i.e. the table will conventionally hold a sufficient number of samples to provide a continuous operation of at least 16 hours. As illustrated, a series of permanently affixed catch pins 120 extend in a circle round the centre of sample table 10. In the embodiment illustrated, twice as many catch pins extend from table 10 as there are sample receptacles contained by the table, and each of the pins is spaced equidistantly from the two adjacent catch pins.

Fig. 3 shows, in more detail, the sample table and the means for moving the sample table so that an untested sample is made available for placement in the receptacle of the DSC cell during each cycle of operation. Specifically, Fig. 3 depicts the carrier support 6 having a support arm 130 for supporting cylinder 7. At or near the base of carrier support 6, is a spring-loaded, movable trigger 131. In operation, the movable trigger 131 of carrier support 6 interacts with the catch pins 120 extending from table 10 to cause sufficient rotation of sample table 10 to provide a new encapsulated sample during each cycle of operation. Specifically, as a new sample is being transported to receptacle 2, the trigger 131 of carrier support 6 catches one catch pin 120 in a manner such that table 10 rotates half the distance required to place a new sample under vacuum nozzle 9. When the carrier support 6 is returned to its original position, there is no movement in the sample table 10 when trigger 131 contacts a catch pin 120 owing to the partial rotation of trigger 131 around the catch pin. Once contact between pin 120 and trigger 131 is terminated, trigger 131 is returned to its original position by spring 132. When piston 5 is extended to remove the tested sample from the DSC cell, the contact of trigger 131 with catch pin 120 rotates the sample table 10 sufficiently to place the new sample directly under nozzle 9. Again, upon the return of piston 5 to its unextended position the spring load of trigger 131 provides no additional rotation of the table upon the contact of catch pin 120 and trigger 131. In the manner described, the sample table is moved so that the vacuum nozzle 9 is now capable of transferring a new sample of an untested material to the differential scanning calorimeter cell during each cycle of operation. This technique merely illustrates one method for ensuring that a new sample is available during each cycle of the sample handling device and should not be construed as limiting the scope of the present invention.

With regard to the other components useful in this invention, Fig. 4 illustrates a preferred cover means, insulating sleeve, and protective hood.

The preferred cover means 20 comprises a gas-permeable disk or plate 106, whose permeability permits the passage of gases through plate or disk 106, and a continuous plate or disk 107 which is essentially impermeable to the passage of gas therethrough. Permeable plate 106 and non-permeable plate 107 are connected or joined by means of a permeable conduit 104 which allows the passage of gas from the interior of the conduit to the environment. In the embodiment shown, gases flowing through the passage(s) or perforation(s) in plate 106 can flow through the passage(s) or perforation(s) in the conduit 104. In this way, during the evaluation of the sample material, any gases generated are free to escape from the receptacle containing the sample, thereby preventing an excessive pressure buildup therein. In addition, a controlled atmosphere can be maintained within the receptacle by purging the cell using a suitable purge gas. Moreover, since top plate 107 is essentially impermeable to the passage of gas, a vacuum can be effectively applied to the top surface thereof and not readily be dissipated. As a result, the cover means is easily moved by the vacuum cup 16 during the removal and replacement operation.

Insulating sleeve 18 is shown with a container 19 affixed thereto. Container 19 has space provided for receiving the cover means 20 after its removal from the measuring cell 92. Similarly, the protective hood 17 has a receptacle 101 for receiving insulating sleeve 18. The receptacle 101, as depicted in Fig. 4, is advantageously tapered and conforms to the shape of the insulating sleeve 18. A receiving ring 100, such as depicted in the embodiment illustrated in Fig. 4, for receiving hood 17 upon its removal from around the DSC cell is also advantageously employed herein. Receiving ring 100 comprises a receptacle 108 which is preferably tapered and conforms to the shape of the protective hood 17. The described receptacles 119, 101 and 100 ensure proper placement of the cover means, insulating sleeve and protective hood upon their sequential removal from the DSC cell, thereby ensuring continuous and repeatable performance of the sample handling device.

The cylinders 3, 7, 12 and 14 are advantageously air-activated, and, where necessary to dampen vibration, supplemented by the presence of oil. Preferably, each cylinder is capable of being activated by a single source of air.

In operation, while each movement of the air-driven cylinders and the application or release of vacuum, as required, to the vacuum nozzle or vacuum cup can be effected manually, the advantages of the present invention are recognized when the movement of the cylinders and the application of vacuum are controlled by a supervisory control system. Supervisory control systems and techniques for using same are well-known in the art and reference is made thereto for the purposes of this invention. Pneumatic valves operated in combination with microprocessor control have been found to be particularly useful in the operation of the automatic sample handling device as illustrated in Fig. 1.

The vacuum nozzle 9 and vacuum cup 16 are designed so that, with the same vacuum, vacuum nozzle 9 is capable of transporting the encapsulated sample without significant damage occurring thereto and vacuum cup 16 is capable of securely transporting the cover means, insulating sleeve and protective hood. The nozzle 9 and vacuum cup 16 illustrated in the Figs. are merely representative of a design that can be suitably employed herein. Vacuum nozzles and/or cups of other design capable of performing the same function are also suitably employed herein.

## Claims

1. A differential scanning calorimetry apparatus comprising means for automatically handling in a cyclic order of operations a plurality of samples on an individual basis, said means comprising a sample holder (10) capable of holding a plurality of samples, first transfer means (90) comprising first vacuum means (9) to move, during each cycle of operation, a sample from the sample holder to a receptacle (2) for the sample, and to remove the tested sample from the receptacle, wherein the first transfer means and the sample holder cooperate in such a manner that a new sample of untested material is transferred from the sample holder to the receptacle and a tested sample is removed from the receptacle during each cycle of operation, wherein the sample holder (10) contains samples destined for differential scanning calorimetry which are provided to the first transfer means (90) in a systematic order, the first transfer means (90) comprises a first vertical air cylinder (7) which carries at its lower end the first vacuum means (9) to remove and to place said samples, the receptacle comprises a removable cover means (17, 18, 20) and provides for thermal analysis of the samples; and second transfer means (14, 15, 16; 12, 22) are provided to remove, during each cycle of operation, the cover means (17, 18, 20) from the receptacle (2) to allow a motion of the first vacuum means, by an activation of the first air cylinder (7), to and from the receptacle (2), and to replace the cover means.

2. The apparatus according to claim 1, characterized in that the first transfer means (90) further comprises a second air cylinder (3) wherein this second air cylinder (3) carries the first vertical air cylinder (7), the second air cylinder (3) being movable from a position wherein the first vertical air cylinder (7) is above the sample holder (10) to a position wherein the first vertical air cylinder (7) is above the receptacle (2), and the first vertical air cylinder (7) being movable from a position wherein the first vacuum means (9) are close to the sample holder (10) and the receptacle (2) respectively to a position wherein this vacuum means (9) are at a distance from the sample holder (10) and the receptacle (2) respectively.

3. The apparatus according to claim 1 or 2, characterized in that the second transfer means (14, 15, 16; 12, 22) comprises a second vacuum means (16).

4. The apparatus of claim 3, characterized in that the second transfer means (14, 15, 16; 12, 22) for moving the cover means (17, 18, 20) comprises a third and a fourth air cylinder (12, 14), wherein the third air cylinder (12) carries the fourth air cylinder (14) and wherein the fourth air cylinder (14) carries at its free end the second vacuum means (16) for picking up the cover means (17, 18, 20), wherein the cover means for the receptacle are designed to let gases pass freely to or from the receptacle while a vacuum can effectively be applied to the cover means.

5. The apparatus of claim 4 characterized in that the receptacle is covered by a sheet (106) having one or more passages which allow the flow of gas, which sheet (106) is connected by a conduit (104) having one or more passages to a continuous sheet (107) to which a vacuum can effectively be applied in order to remove and place the cover means (17, 18, 20) while gases can freely pass to or from the receptacle (2).

**Patentansprüche**

1. Differential (scanning) kalorimeter mit Einrichtungen zum automatischen Handhaben einer Vielzahl von Einzelproben in einer zyklischen Reihenfolge von Arbeitsvorgängen, wobei die Einrichtungen enthalten, einen Probenhalter (10) zum Halten einer Vielzahl von Proben, erste Übertragungseinrichtungen (90) mit ersten Vakuumeinrichtungen (9) zum Bewegen einer Probe aus dem Probenhalter in einen Sammelbehälter (2) für die Probe und zum Entfernen der untersuchten Probe aus dem Sammelbehälter während jedes Arbeitszyklus, wobei die ersten Übertragungseinrichtungen und der Probenhalter so zusammenwirken, daß während jedes Arbeitszyklus eine neue Probe ungeprüften Materials vom Probenhalter in den Sammelbehälter überführt und eine untersuchte Probe aus dem Sammelbehälter entfernt wird, wobei der Probenhalter zur differentiellen kalorimetrischen Messung bestimmte Proben enthält, die den ersten Übertragungseinrichtungen (90) in einer systematischen Reihenfolge zugeführt werden, wobei die ersten Übertragungseinrichtung (90) einen ersten senkrechten Luftzylinder (7) enthalten, der an seinem unteren Ende erste Vakuumeinrichtungen (9) trägt, um die Proben zu entfernen und zu plazieren, und der für die thermische Analyse ausgebildete Sammelbehälter entfernbare Abdeckeinrichtungen (17, 18, 20) aufweist und zweite Übertragungseinrichtungen (14, 15, 16; 12, 22) vorhanden sind, um während jedes Arbeitszyklus die Abdeckeinrichtungen (17, 18, 20) vom Sammelbehälter (2) zu entfernen, um eine Bewegung der ersten Vakuumeinrichtungen vom und zum Sammelbehälter (2) durch Aktivieren des ersten Luftzylinders und die Rückführung der Abdeckeinrichtungen zu erlauben.

2. Vorrichtung nach Anspruch 1, dadurch gekennzeichnet, daß die ersten Übertragungseinrichtungen weiterhin einen zweiten Luftzylinder (3) aufweisen, wobei der zweite Luftzylinder (3) den ersten senkrechten Luftzylinder (7) trägt und der zweite Luftzylinder (3) bewegbar ist aus einer Stellung, bei der der erste Luftzylinder (7) sich über dem Probenhalter befindet in einer Stellung, in der der erste senkrechte Luftzylinder sich über dem Sammelbehälter befindet und der erste senkrechte Luftzylinder (7) bewegbar ist aus einer Stellung, in der die ersten Vakuumeinrichtungen (9) sich neben dem Probenhalter und dem Sammelbehälter (2) befinden in einer Stellung, in der diese Vakuumeinrichtungen (9) sich in Abstand vom Probenhalter (10) und den zweiten Vakuumeinrichtungen befinden.

3. Vorrichtung nach Anspruch 1 oder 2, dadurch gekennzeichnet, daß die zweiten Übertragungseinrichtungen (14, 15, 16; 12, 22) eine zweite Vakuumeinrichtung (16) aufweisen.

4. Vorrichtung nach Anspruch 3, dadurch gekennzeichnet, daß die zweiten Übertragungseinrichtungen (14, 15, 16; 12, 22) zum Bewegen der Abdeckeinrichtungen (17, 18, 20) einen dritten und vierten Luftzylinder (12, 14) aufweisen, wobei der dritte Luftzylinder (12) den vierten Luftzylinder (14) trägt und der vierte Luftzylinder (14) an seinem freien Ende die zweiten Vakuumeinrichtungen (16) zum Abheden der Abdeckeinrichtungen (17, 18, 20) trägt, wobei der Deckel des Sammelbehälters so gestaltet ist, daß Gase frei zum oder aus dem Sammelbehälter gelangen können, während Vakuum wirksam auf den Dekkel aufgegeben werden kann.

5. Vorrichtung nach Anspruch 4, dadurch gekennzeichnet, daß der Sammelbehälter von einer Folie (106) bedeckt ist, die eine oder mehrere Durchlässe aufweist, die Gasfluß erlauben, wobei die Folie (106) mit einer Leitung (104) verbunden ist, die einen oder mehrere Durchgänge zu einer undurchlässigen Folie (107) aufweist, an die wirksam ein Vakuum angelegt werden kann, um die Abdeckeinrichtungen (17, 18, 20) zu entfernen und wieder zu plazieren, während Gase frei zum oder vom Sammelbehälter (2) strömen können.

**Revendications**

1. Appareil de calorimétrie pour analyse différentielle comprenant des moyens permettant de manipuler automatiquement, dans un ordre cyclique d'opérations, de nombreux échantillons pris un par un, ces moyens comprenant un porte-échantillons (10) pouvant porter un certain nombre d'échantillons, des premiers moyens de transfert (90) comprenant des premiers moyens à dépression (9) permettant de déplacer, à chaque cycle de fonctionnement, un échantillon depuis le porte-échantillons jusqu'à un logement (2) prévu pour l'échantillon, et de retirer de ce logement l'échantillon testé, ces premiers moyens de transfert et le porte-échantillons coopérant de manière telle qu'un nouvel échantillon de matière non testée soit transféré du porte-échantillons au logement et qu'un échantillon testé soit retiré de ce logement à chaque cycle de fonctionnement, le porte-échantillons (10) contenant des échantillons destinés à faire l'objet d'une calorimétre par analyse différentielle et qui sont fournis aux premiers moyens de transfert (90) dans un order systématique, ces premiers moyens de transfert (90) comprenant un premier vérin pneumatique vertical (7) qui porte à son extrémité inférieure les premiers moyens à dépression (9) destinés à retirer et à placer les échantillons, le logement comportant des moyens amovibles de couverture (17, 18, 20) et assurant l'analyse thermique des échantillons, tandis que des seconds moyens de transfert (14, 15, 16; 12, 22) sont prévus pour éloigner les moyens de recouvrement (17, 18, 20) par rapport au logement (2) à cheque cycle de fonctionnement, afin de permettre, grâce à une mise en service du premier vérin pneumatique (7) un déplacement des premiers moyens à dépression vers le logement (2) et à partir de celui-ci, et de remettre en place les moyens de couverture.

2. Appareil suivant la revendication 1, caractérisé en ce que les premiers moyens de transfert (90) comprennent en outre un deuxième vérin pneumatique (3), ce deuxième vérin pneumatic (3) portant le premier vérin pneumatique vertical (7) et étant mobile d'une position dans laquelle ce premier vérin pneumatique vertical (7) est situé au-dessus du porte-échantillons (10) à une position dans laquelle ce premier vérin pneumatique vertical (7) est situé au-dessus du logement (2), et le premier vérin pneumatique vertical (7) étant mobile d'une position dans laquelle les premiers moyens à dépression (9) sont proches respectivement du porte-échantillons (10) et du logement (2) à une position dans laquelle ces moyens à dépression (9) sont situés à une certaine distance respectivement du porte-échantillons (10) et du logement (2).

3. Appareil suivant la revendication 1 ou 2, caractérisé en ce que les seconds moyens de transfert (14, 15, 16; 12, 22) comprennent des seconds moyens à dépression (16).

4. Appareil suivant la revendication 3, caractérisé en ce que les seconds moyens de transfert (14, 15, 16; 12, 22) destinés à déplacer les moyens de recouvrement (17, 18, 20) comprennent un troisième et un quatrième vérins pneumatiques (12, 14), le troisiéme vérin pneumatique (12) portant le quatrième vérin pneumatique (14) et ce quatrième vérin pneumatique (14) portant à son extrémité libre les seconds moyens à dépression (16) en vue de prélever les moyens de recouvrement (17, 18, 20), tandis que les moyens de couverture prévus pour le logement sont conçus de façon à laisser passer les gaz librement vers le logement ou à partir de celui-ci, une dépression pouvant être appliquée de manière efficace à ces moyens de recouvrement.

5. Appareil suivant la revendication 4, caractérisé en ce que le logement est recouvert par une plaque (106) offrant un ou plusieurs passages qui permettent l'écoulement des gaz, cette plaque (106) étant réunie, par un conduit (104) offrant un ou plusieurs passages, à une plaque continue (107) à laquelle une dépression peut être appliquée d'une manière efficace en vue de retirer et placer les moyens de couverture (17, 18, 20), tandis que des gaz peuvent passer librement vers le logement (2) ou à partir de celui-ci.

FIG.1

EP 0 117 006 B1

FIG.4

FIG.2

# FIG.3